# EUROPÄISCHE PATENTSCHRIFT

(11) **EP 1 581 457 B1**
(45) Veröffentlichungstag und Bekanntmachung des Hinweises auf die Patenterteilung: **23.03.2011**
(21) Anmeldenummer: 03789225.4
(22) Anmeldetag: 11.12.2003
(51) Int. Cl.: C01B 7/04, B01J 8/06

(54) **VERFAHREN ZUR HERSTELLUNG VON CHLOR DURCH GASPHASENOXIDATION VON CHLORWASSERSTOFF**
METHOD FOR PRODUCING CHLORINE BY OXIDISING HYDROGEN CHLORINE IN A GASEOUS PHASE
PROCEDE DE PRODUCTION DE CHLORE PAR OXYDATION DE CHLORURE D'HYDROGENE EN PHASE GAZEUSE

(30) Priorität: 12.12.2002 DE 10258180
(43) Veröffentlichungstag der Anmeldung: 05.10.2005
(73) Patentinhaber: BASF SE, 67056 Ludwigshafen (DE)
(72) Erfinder: OLBERT, Gerhard, 69221 Dossenheim (DE); WALSDORFF, Christian, 67059 Ludwigshafen (DE); HARTH, Klaus, 67317 Altleiningen (DE); STRÖFER, Eckhard, 68163 Mannheim (DE); FIENE, Martin, 67150 Niederkirchen (DE)
(74) Vertreter: Kern, Hedwig
(86) Internationale Anmeldenummer: PCT/EP2003/014075
(87) Internationale Veröffentlichungsnummer: WO 2004/052777

(56) Entgegenhaltungen:
- EP-A- 1 170 250
- DE-A- 10 134 026

## Beschreibung

Die Erfindung betrifft ein Verfahren zur Herstellung von Chlor durch Gasphasenoxidation von Chlorwasserstoff in Gegenwart eines Festbettkatalysators.

Das von Deacon 1868 entwickelte Verfahren der katalytischen Chlorwasserstoffoxidation mit Sauerstoff in einer exothermen Gleichgewichtsreaktion steht am Anfang der technischen Chlorchemie. Durch die Chloralkalielektrolyse wurde das Deacon-Verfahren stark in den Hintergrund gedrängt, die nahezu gesamte Produktion von Chlor erfolgte durch Elektrolyse wässriger Kochsalzlösungen.

Die Attraktivität des Deacon-Verfahrens nimmt jedoch in jüngerer Zeit wieder zu, da der weltweite Chlorbedarf stärker als die Nachfrage nach Natronlauge wächst. Dieser Entwicklung kommt das Verfahren zur Herstellung von Chlor durch Oxidation von Chlorwasserstoff entgegen, das von der Natronlaugeherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an. Der bei der Isocyanat-Herstellung gebildete Chlorwasserstoff wird überwiegend in der Oxichlorierung von Ethylen zu 1,2-Dichlorethan eingesetzt, das zu Vinylchlorid und weiter zu PVC verarbeitet wird. Beispiele für weitere Verfahren, bei denen Chlorwasserstoff anfällt, sind die Vinylchlorid-Herstellung, die Polycarbonat-Herstellung oder das PVC-Recycling.

Die Oxidation von Chlorwasserstoff zu Chlor ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedrigerer Temperatur ablaufen lassen. Derartige Katalysatoren sind insbesondere Katalysatoren auf Basis von Ruthenium, beispielsweise die in DE-A 197 48 299 beschriebenen geträgerten Katalysatoren mit der Aktivmasse Rutheniumoxid oder einem Rutheniummischoxid, wobei der Gehalt an Rutheniumoxid 0,1 bis 20 Gew.-% und der mittlere Teilchendurchmesser von Rutheniumoxid 1,0 bis 10,0 nm beträgt. Weitere geträgerte Katalysatoren auf Basis von Ruthenium sind aus DE-A 197 34 412 bekannt: Rutheniumchloridkatalysatoren, die mindestens eine der Verbindungen Titanoxid und Zirkoniumoxid enthalten, Ruthenium-Carbonyl-Komplexe, Rutheniumsalze anorganischer Säuren, Ruthenium-Nitrosyl-Komplexe, Ruthenium-Amin-Komplexe, Rutheniumkomplexe organischer Amine oder Ruthenium-Acetylacetonat-Komplexe.

Ein bekanntes technisches Problem bei Gasphasenoxidationen, vorliegend der Oxidation von Chlorwasserstoff zu Chlor, ist die Bildung von Hot-Spots, das heißt von lokalen Überhitzungen, die zur Zerstörung des Katalysator- und Kontaktrohrmaterials führen können. Um die Bildung von Hot-Spots zu reduzieren bzw. zu verhindern, wurde daher in WO 01/60743 vorgeschlagen, Katalysatorfüllungen einzusetzen, die in unterschiedlichen Bereichen der Kontaktrohre jeweils unterschiedliche Aktivität aufweisen, das heißt Katalysatoren mit an das Temperaturprofil der Reaktion angepasster Aktivität. Ein ähnliches Ergebnis soll durch gezielte Verdünnung der Katalysatorschüttung mit Inertmaterial erreicht werden.

EP 1 170 250 offenbart ein Verfahren zur katalytischen Herstellung von Chlor mittels Oxidation von Chlorwasserstoff. Das industrielle Verfahren wird in einem Rohrbündelreaktor ausgeführt. DE 10134 026 offenbart einen Rohrbündelreaktor mit Umlenkblechen zur Verbesserung der Wärmeübertragung.

Nachteilig an diesen Lösungen ist, dass zwei oder mehrere Katalysatorsysteme entwickelt und in den Kontaktrohren eingesetzt werden müssen bzw. dass durch Einsatz von Inertmaterial die Reaktorkapazität beeinträchtigt wird.

Demgegenüber war es Aufgabe der Erfindung, ein Verfahren zur Herstellung von Chlor durch Gasphasenoxidation von Chlorwasserstoff mit einem molekularen Sauerstoff enthaltenden Gasstrom in Gegenwart eines Festbettreaktors in großtechnischem Maßstab zur Verfügung zu stellen, das insbesondere auch für Reaktoren mit einer großen Anzahl von Kontaktrohren eine effektive Wärmeabführung gewährleistet und trotz des hochkorrosiven Reaktionsgemisches eine ausreichende Standzeit aufweist. Darüber hinaus soll die Hot-Spot-Problematik ohne bzw. mit einer geringeren Abstufung der Katalysatoraktivität bzw. ohne Verdünnung des Katalysators gemindert oder vermieden werden.

In einer Ausgestaltung war es Aufgabe der Erfindung, die Korrosionsprobleme an den Kontaktrohren im Umlenkbereich zu vermeiden und ein Verfahren mit höherer Querschnittsbelastung und somit höherer Reaktorkapazität zu ermöglichen.

Die Lösung geht aus von einem Verfahren zur Herstellung von Chlor durch Gasphasenoxidation von Chlorwasserstoff mit einem molekularen Sauerstoff enthaltenden Gasstrom in Gegenwart eines Festbettkatalysators.

Die Erfindung ist dadurch gekennzeichnet, dass man das Verfahren in einem Reaktor mit einem Bündel von parallel zueinander, in Reaktorlängsrichtung angeordneten Kontaktrohren durchführt, die an ihren Enden in Rohrböden befestigt sind, mit je einer Haube an beiden Enden des Reaktors, sowie mit einem oder mehreren, senkrecht zur Reaktorlängsrichtung im Zwischenraum zwischen den Kontaktrohren angeordneten ringförmigen Umlenkblechen, die in der Reaktormitte kreisförmige Durchtrittsöffnungen freilassen und einem oder mehreren scheibenförmigen Umlenkblechen, die am Reaktorrand ringförmige Durchtrittsöffnungen freilassen, mit alternierender Anordnung von ringförmigen Umlenkblechen und scheibenförmigen Umlenkblechen, wobei die Kontaktrohre mit dem Festbettkatalysator befüllt sind, der Chlorwasserstoff sowie der molekularen Sauerstoff enthaltende Gasstrom von einem Reaktorende über eine Haube durch die Kontaktrohre geleitet und das gasförmige Reaktionsgemisch vom entgegengesetzten Reaktorende über die zweite Haube abgezogen und wobei durch den Zwischenraum um die Kontaktrohre ein flüssiges Wärmetauschmittel geleitet wird, und wobei der Reaktor im Bereich der Durchtrittsöffnungen unberohrt ist.

Erfindungsgemäß wird das Verfahren in einem Rohrbündelreaktor durchgeführt, mit zwischen den Kontaktrohren eingebauten Umlenkblechen. Dadurch wird eine überwiegende Queranströmung der Kontaktrohre durch das Wärmetauschmittel und bei gleichem Wärmetauschmittelstrom eine Erhöhung der Strömungsgeschwindigkeit des Wärmetauschmittels bewirkt und somit eine bessere Abführung der Reaktionswärme über das zwischen den Kontaktrohren zirkulierende Wärmetauschmittel. Indem stets jeweils ein ringförmiges Umlenkblech, das in der Reaktormitte eine kreisförmige Durchtrittsöffnung freilässt, auf ein scheibenförmiges Umlenkblech folgt, das am Reaktorrand eine ringförmige Durchtrittsöffnung freilässt, wird eine besonders günstige Strömungsführung für das Wärmetauschmittel erzwungen, die insbesondere auch bei Reaktoren mit einer großen Anzahl von Kontaktrohren eine weitgehend gleichförmige Temperatur über den Reaktorquerschnitt gewährleisten.

Die Geometrie der Umlenkbleche und Durchtrittsöffnungen muss nicht exakt der Kreis- bzw. Ringform entsprechen; geringfügige Abweichungen beeinträchtigen das erfindungsgemäße Ergebnis nicht.

Dass die scheibenförmigen Umlenkbleche am Reaktorrand ringförmige Durchtrittsöffnungen freilassen, bedeutet, dass durch die geometrische Ausgestaltung der Umlenkbleche zwischen dem Ende derselben und der Reaktorinnenwand Durchtrittsöffnungen freibleiben.

Im vollberohrten Reaktor mit ring- und scheibenförmigen Umlenkblechen, strömt jedoch das Wärmetauschmittel im Bereich der Durchtrittsöffnungen, das heißt in den Umlenkbereichen, weitgehend in Längsrichtung entlang den Kontaktrohren. Dadurch werden die Kontaktrohre, die sich in diesen Umlenkbereichen befinden, schlechter gekühlt mit der Folge, dass Korrosionsprobleme auftreten können.

Daher wird in einer besonders vorteilhaften Ausgestaltung das erfindungsgemäße Verfahren in einem Rohrbündelreaktor durchgeführt, der im Bereich der Durchtrittsöffnungen, das heißt in der Reaktormitte und im Bereich der Reaktorinnenwand, unberohrt ist.

In dieser Ausgestaltung wird eine definierte, nahezu reine Queranströmung der Kontaktrohre durch das Wärmetauschmittel gewährleistet.

Aufgrund der Strömungsführung steigt der wärmetauschmittelseitige Wärmeübergangskoeffizient für die Kontaktrohre, über den Reaktorquerschnitt betrachtet, von außen nach innen um bis zu 60 % an.

Vorliegend sind ein oder mehrere ringförmige Umlenkbleche vorgesehen, die an der Reaktormantelwand befestigt sind und in der Reaktormitte kreisförmige Durchtrittsöffnungen freilassen und andererseits scheibenförmige Umlenkbleche, die an einem Stützrohr befestigt sind und die am Reaktorrand ringförmige Durchtrittsöffnungen freilassen, wobei ringförmige Umlenkbleche und scheibenförmige Umlenkbleche alternierend angeordnet sind.

Es wurde gefunden, dass durch die Freilassung des Reaktorinnenraums im Bereich der Durchtrittsöffnungen, das heißt, dass im Bereich der Durchtrittsöffnungen der Umlenkbleche keine Kontaktrohre angeordnet sind, die Kapazität eines Reaktors bei unverändertem Volumen des Innenraums und erhöhter Kühlmittelmenge um den Faktor 1,3 bis 2,0 gegenüber einem vollberohrten Reaktor erhöht werden kann, obwohl eine niedrigere Gesamtzahl von Kontaktrohren im Reaktor untergebracht ist.

Als flüssiges Wärmetauschmittel kann besonders vorteilhaft eine Salzschmelze, insbesondere die eutektische Salzschmelze von Kaliumnitrat und Natriumnitrit eingesetzt werden.

Die Umlenkbleche sind bevorzugt in der Weise ausgestaltet, dass alle ringförmigen Umlenkbleche jeweils flächenmäßig gleich große kreisförmige Durchtrittsöffnungen sowie alle scheibenförmigen Umlenkbleche jeweils flächenmäßig gleich große ringförmige Durchtrittsöffnungen freilassen.

Zwecks möglichst gleichmäßiger Anströmung sämtlicher Kontaktrohre ist es vorteilhaft, das flüssige Wärmetauschmittel jeweils über eine Ringleitung, die am Reaktorumfang angeordnet ist, zu- und über eine weitere Ringleitung am Reaktorumfang abzuführen, insbesondere über eine untere Ringleitung mit Mantelöffnungen durch den Zwischenraum um die Kontaktrohre zu leiten und über Mantelöffnungen über eine obere Ringleitung aus dem Reaktor abzuziehen.

Für das erfindungsgemäße Verfahren können grundsätzlich alle bekannten Katalysatoren für die Oxidation von Chlorwasserstoff zu Chlor eingesetzt werden, beispielsweise die eingangs beschriebenen, aus DE-A 197 48 299 oder DE-A 197 34 412 bekannten Katalysatoren auf Basis von Ruthenium. Besonders geeignet sind auch die in DE 102 44 996.1 beschriebenen Katalysatoren auf Basis von Gold, enthaltend auf einem Träger 0,001 bis 30 Gew.-% Gold, 0 bis 3 Gew.-% eines oder mehrerer Erdalkalimetalle, 0 bis 3 Gew.-% eines oder mehrerer Alkalimetalle, 0 bis 10 Gew.-% eines oder mehrerer Seltenerden-Metalle und 0 bis 10 Gew.-% eines oder mehrerer weiterer Metalle, ausgewählt aus der Gruppe bestehend aus Ruthenium, Palladium, Platin, Osmium, Iridium, Silber, Kupfer und Rhenium, jeweils bezogen auf das Gesamtgewicht des Katalysators.

Das erfindungsgemäße Verfahren ist auch grundsätzlich nicht eingeschränkt bezüglich der Quelle für das Edukt Chlorwasserstoff. Beispielsweise kann als Edukt ein Chlorwasserstoffstrom eingesetzt werden, der in einem Verfahren zur Herstellung von Isocyanaten als Koppelprodukt anfällt, wie in DE 102 35 476.6 beschrieben.

Im Reaktor ist ein Bündel, das heißt eine Vielzahl von Kontaktrohren, parallel zueinander in Reaktorlängsrichtung angeordnet. Die Anzahl der Kontaktrohre liegt bevorzugt im Bereich von 1000 bis 40000, insbesondere von 10000 bis 30000.

Jedes Kontaktrohr weist bevorzugt eine Wandstärke im Bereich von 1,5 bis 5,0 mm, insbesondere von 2,0 bis 3,0 mm, und einen Rohrinnendurchmesser im Bereich von 10 bis 70 mm, bevorzugt im Bereich von 15 bis 30 mm, auf.

Die Kontaktrohre weisen bevorzugt eine Länge im Bereich von 1 bis 10 m, bevorzugt von 1,5 bis 8,0 m, besonders bevorzugt von 2,0 bis 7,0 m, auf.

Die Kontaktrohre sind bevorzugt derart im Reaktorinnenraum angeordnet, dass das Teilungsverhältnis, das heißt das Verhältnis zwischen dem Abstand der Mittelpunkte unmittelbar benachbarter Kontaktrohre und dem Außendurchmesser der Kontaktrohre im Bereich von 1,15 bis 1,6, bevorzugt im Bereich von 1,2 bis 1,4 liegt, und dass die Kontaktrohre in Dreiecksteilung im Reaktor angeordnet sind.

Die Kontaktrohre sind bevorzugt aus Reinnickel oder aus einer Nickelbasislegierung gebildet.

Ebenso sind auch alle weiteren Bauteile des Reaktors, die mit der hochkorrosiven Reaktionsgasmischung in Berührung kommen, bevorzugt aus Reinnickel oder einer Nickelbasislegierung gebildet oder mit Nickel oder einer Nickelbasislegierung plattiert.

Bevorzugt werden als Nickelbasislegierungen Inconel 600 oder Inconel 625 eingesetzt. Die genannten Legierungen haben gegenüber Reinnickel den Vorteil einer erhöhten Temperaturfestigkeit. Inconel 600 enthält neben ca. 80 % Nickel noch rund 15 % Chrom sowie Eisen. Iconel 625 enthält überwiegend Nickel, 21 % Chrom, 9 % Molybdän sowie einige % Niob.

Die Kontaktrohre sind an beiden Enden in Rohrböden flüssigkeitsdicht befestigt, bevorzugt verschweißt. Die Rohrböden bestehen bevorzugt aus Kohlenstoff-Stahl der warmfesten Reihe, Edelstahl, zum Beispiel Edelstahl mit den Werkstoffnummern 1.4571 oder 1.4541 oder aus Duplexstahl (Werkstoffnummer 1.4462) und sind bevorzugt an der Seite, mit der das Reaktionsgas in Berührung kommt, mit Reinnickel oder einer Nickelbasislegierung plattiert. Die Kontaktrohre sind nur an der Plattierung mit den Rohrböden verschweißt.

Grundsätzlich kann jede verfahrenstechnische Möglichkeit zum Aufbringen der Plattierung eingesetzt werden, beispielsweise Walzplattierung, Sprengplattierung, Auftragschweißung oder Streifenplattierung.

Der Innendurchmesser des Reaktors beträgt bevorzugt zwischen 1,0 und 9,0 m, besonders bevorzugt zwischen 2,0 und 6,0 m.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen.

In den Hauben sind bevorzugt Gasverteiler zur Vergleichmäßigung des Gasstromes angeordnet, beispielsweise in Form einer Platte, insbesondere einer perforierten Platte.

Ein besonders effektiver Gasverteiler ist in Form eines perforierten, sich in Richtung des Gasstromes verjüngenden Kegelstumpfes ausgebildet, dessen Perforationen an den Seitenflächen ein größeres Öffnungsverhältnis, von ca. 10 bis 20 %, gegenüber den Perforationen in der in den Reaktorinnenraum hineinragenden, kleineren Grundfläche, von ca. 2 bis 10 %, aufweisen.

Da die Hauben und Gasverteiler Bauteile des Reaktors sind, die mit dem hochkorrosiven Reaktionsgasgemisch in Berührung kommen, gilt das vorstehend bezüglich der Materialauswahl dargelegte, das heißt die Bauteile aus Reinnickel oder einer Nickelbasislegierung hergestellt oder damit plattiert sind.

Dies gilt insbesondere auch für Rohrleitungen, durch die das Reaktionsgasgemisch strömt oder statische Mischer, sowie für die Eindüsungsorgane, zum Beispiel das Einsteckrohr.

Im Zwischenraum zwischen den Kontaktrohren sind senkrecht zur Reaktorlängsrichtung ein oder mehrere ringförmige Umlenkbleche angeordnet, die in der Reaktormitte kreisförmige Durchtrittsöffnungen freilassen, sowie ein oder mehrere scheibenförmige Umlenkbleche, die am Reaktorrand ringförmige Durchtrittsöffnungen freilassen, mit alternierender Anordnung von ringförmigen und scheibenförmigen Umlenkblechen. Dadurch wird, insbesondere für große Reaktoren, mit einer Vielzahl von Kontaktrohren, eine besonders günstige Strömungsführung für das Wärmetauschmittel gewährleistet. Die Umlenkbleche bewirken eine Umlenkung des im Reaktorinnenraum, im Zwischenraum zwischen den Kontaktrohren zirkulierenden Wärmetauschmittels, dergestalt, dass die Kontaktrohre vom Wärmetauschmittel quer angeströmt werden, wodurch die Wärmeabführung verbessert wird.

Die Anzahl der Umlenkbleche beträgt bevorzugt etwa 1 bis 15, besonders bevorzugt 3 bis 9. Vorzugsweise sind sie äquidistant zu einander angeordnet, besonders bevorzugt ist jedoch die unterste und die oberste Umlenkscheibe jeweils vom Rohrboden weiter entfernt als der Abstand zweier aufeinanderfolgende Umlenkscheiben zueinander, bevorzugt um bis zum das 1,5-fachen.

Die Fläche jeder Durchtrittsöffnung beträgt bevorzugt 2 bis 40 %, insbesondere 5 bis 20 % des Reaktorquerschnitts.

Bevorzugt sind die ringförmigen wie auch die scheibenförmigen Umlenkbleche nicht dichtend um die Kontaktrohre angeordnet, und lassen eine Leckageströmung von bis zu 30 Vol.-% des Gesamtstroms des Wärmetauschmittels zu. Hierzu sind zwischen den Kontaktrohren und Umlenkblechen Spalte im Bereich von 0,1 bis 0,4 mm, bevorzugt von 0,15 bis 0,30 mm zugelassen. Für eine weitere Vergleichmäßigung der Wärmeabführung über sämtliche Kontaktrohre über den Reaktorquerschnitt ist es besonders vorteilhaft, wenn die Spalte zwischen den Kontaktrohren und den ringförmigen Umlenkblechen von außen nach innen, das heißt vom Reaktorrand zur Reaktormitte hin zunehmen, bevorzugt kontinuierlich.

Es ist vorteilhaft, die ringförmigen Umlenkbleche zur Reaktorinnenwand hin flüssigkeitsdicht zu gestalten, so dass direkt an der Reaktormantelwand kein zusätzlicher Leckagestrom auftritt.

Die Umlenkbleche können bevorzugt aus dem gleichen Material wie die Rohrböden, das heißt aus Kohlenstoffstahl der warmfesten Reihe, Edelstahl mit den Werkstoffnummern 1.4571 oder 1.4541 oder aus Duplexstahl (Werkstoffnummer 1.4462), bevorzugt in einer Dicke von 6 bis 30 mm, bevorzugt von 10 bis 20 mm, gebildet sein.

Die Kontaktrohre sind mit einem Feststoffkatalysator gefüllt. Die Katalysatorschüttung in den Kontaktrohren weist bevorzugt ein Lückenvolumen von 0,15 bis 0,65, insbesondere von 0,20 bis 0,45, auf.

Besonders bevorzugt ist der der Zuführung des gasförmigen Reaktionsgemisches zugewandte Bereich der Kontaktrohre auf eine Länge von 5 bis 20 %, bevorzugt auf eine Länge von 5 bis 10 %, der Gesamtrohrlänge der Kontaktrohre mit einem Inertmaterial befüllt.

Zum Ausgleich von thermischen Ausdehnungen sind im Reaktormantel vorteilhaft ein oder mehrere ringförmig am Reaktormantel angebrachte Kompensatoren vorgesehen.

Das Verfahren ist grundsätzlich nicht eingeschränkt bezüglich der Strömungsführung für das Reaktionsgasgemisch wie auch für das Wärmetauschmittel, das heißt beide können unabhängig voneinander jeweils von oben nach unten oder von unten nach oben durch den Reaktor gerührt werden. Jede Kombination der Strömungsführung von Reaktionsgasgemisch und Wärmetauschmittel ist möglich. Es ist beispielsweise möglich, dass man das gasförmige Reaktionsgemisch und das flüssige Wärmetauschmittel im Kreuzgegenstrom oder in dem Kreuzgleichstrom durch den Reaktor leitet.

Auf das Temperaturprofil im Reaktionsverlauf kann besonders gut eingegangen werden, indem man das Verfahren in einem Reaktor durchführt, der zwei oder mehrere Reaktionszonen aufweist. Es ist gleichermaßen möglich, anstelle eines einzigen Reaktors mit zwei oder mehreren Reaktionszonen das Verfahren in zwei oder mehreren getrennten Reaktoren durchzuführen.

Wird das Verfahren in zwei oder mehreren getrennten Reaktoren durchgeführt, so können sich die Kontaktrohre bevorzugt von einem Reaktor zum anderen in ihrem Innendurchmesser unterscheiden. Es können insbesondere Reaktoren, in denen besonders Hot-Spot gefährdete Reaktionsteilabschnitte verlaufen, mit Kontaktrohren mit geringerem Rohrinnendurchmesser ausgestattet werden im Vergleich zu den übrigen Reaktoren. Dadurch wird eine verbesserte Wärmeabführung in diesen besonders gefährdeten Bereichen gewährleistet.

Zusätzlich oder alternativ ist es auch möglich, im Hot-Spot gefährdeten Reaktionsteilabschnitt zwei oder mehrere Reaktoren parallel zueinander anzuordnen, mit anschließender Zusammenführung des Reaktionsgemisches über einen Reaktor.

Im Falle der Ausgestaltung eines Reaktors mit mehreren Zonen, bevorzugt mit 2 bis 8, besonders bevorzugt mit 2 bis 6 Reaktionszonen, werden diese durch Trennbleche weitgehend flüssigkeitsdicht voneinander getrennt. Unter weitgehend wird vorliegend verstanden, dass eine vollständige Trennung nicht zwingend erforderlich ist, sondern dass fertigungstechnische Toleranzen erlaubt sind.

So wird eine weitgehende Trennung schon dadurch erreicht, dass das Trennblech in relativ großer Dicke, von etwa 15 bis 60 mm, ausgebildet ist, wobei ein feiner Spalt zwischen dem Kontaktrohr und dem Trennblech, von etwa 0,1 bis 0,25 mm, erlaubt ist. Dadurch ist es insbesondere auch möglich, die Kontaktrohre bei Bedarf einfach auszutauschen.

In einer bevorzugten Ausgestaltung kann die Abdichtung zwischen den Kontaktrohren und den Trennblechen verbessert werden, indem die Kontaktrohre leicht angewalzt oder hydraulisch aufgeweitet werden.

Da die Trennbleche mit dem korrosiven Reaktionsgemisch nicht in Kontakt treten, ist die Materialwahl für die Trennbleche nicht kritisch. Hierfür kann beispielsweise dasselbe Material wie für den die Plattierung tragenden Teil der Rohrböden, das heißt Kohlenstoff-Stahl der warmfesten Reihe, Edelstahl, zum Beispiel Edelstahl mit den Werkstoffnummern 1.4571 oder 1.4541 oder Duplexstahl (Werkstoffnummer 1.4462), verwendet werden.

Bevorzugt sind für das Wärmetauschmittel im Reaktormantel und/oder in den Rohrböden und/oder in den Trennblechen Entlüftungs- und Ablaufbohrungen vorgesehen, insbesondere an mehreren, bevorzugt an 2 bis 4 symmetrisch über den Reaktorquerschnitt verteilten Stellen, deren Öffnungen nach außen, bevorzugt in auf der Reaktoraußenwand oder auf den Rohrböden außerhalb des Reaktors aufgeschweißten Halbschalen münden.

Im Falle eines Reaktors mit zwei oder mehreren Reaktionszonen ist es vorteilhaft, dass jede Reaktionszone mindestens einen Kompensator zum Ausgleich von thermischen Spannungen aufweist.

In der Verfahrensvariante mit mehreren Reaktoren ist eine Zwischeneinspeisung von Sauerstoff vorteilhaft, vorzugsweise über ein Lochblech in der unteren Reaktorhaube, das für eine gleichmäßigere Verteilung sorgt. Das Lochblech weist bevorzugt einen Perforationsgrad von 0,5 bis 5 % auf. Da es in unmittelbarem Kontakt mit dem hochkorrosiven Reaktionsgemisch steht, wird es bevorzugt aus Nickel oder einer Nickelbasislegierung hergestellt.

Im Falle einer Ausführungsform mit zwei oder mehreren, unmittelbar übereinander angeordneten Reaktoren, das heißt in einer besonders platzsparenden Konstruktionsvariante, unter Verzicht auf die untere Haube des jeweils höher angeordneten und die obere Haube des jeweils darunter angeordneten Reaktors ist es möglich, die Zwischeneinspeisung von Sauerstoff zwischen zwei, unmittelbar übereinander angeordneten Reaktoren, über eine außen aufgeschweißte Halbschale, über gleichmäßig verteilte Bohrungen, vorzunehmen.

Bevorzugt sind zwischen den einzelnen Reaktoren, nach der Zwischeneinspeisung von Sauerstoff, statische Mischer angeordnet.

Bezüglich der Materialauswahl für die statischen Mischer gilt das eingangs allgemein für Bauteile, die mit dem Reaktionsgasgemisch in Berührung kommen, Ausgeführte, das heißt dass Reinnickel oder Nickelbasislegierungen bevorzugt sind.

Im Verfahren mit mehreren Reaktoren ist es möglich, eine Zwischeneinspeisung von Sauerstoff über ein perforiertes, bevorzugt gekrümmtes Einsteckrohr vorzunehmen, das in das Verbindungsrohr zwischen zwei Reaktoren mündet.

Die Erfindung wird im Folgenden anhand einer Zeichnung näher erläutert.

In den Figuren bezeichnen gleiche Bezugsziffern jeweils gleiche oder entsprechende Merkmale.

Es zeigen im Einzelnen:
- Figur 1: eine erste bevorzugte Ausführungsform eines Reaktors für das erfindungs- gemäße Verfahren im Längsschnitt mit Kreuzgegenstromführung von Reak- tionsgemisch und Wärmetauschmittel, mit Querschnittsdarstellung in Fig. 1A,
- Figur 2: eine weitere bevorzugte Ausführungsform eines Reaktors im Längsschnitt, mit Kreuzgegenstromführung von Reaktionsgemisch und Wärmetauschmit- tel, wobei der Reaktor im Bereich der Durchtrittsöffnungen unberohrt ist, mit Querschnittsdarstellung in Fig. 2A,
- Figur 3: eine weitere Ausführungsform eines mehrzonig ausgebildeten Reaktors,
- Figur 4: eine Ausführungsform mit zwei hintereinander geschalteten Reaktoren,
- Figur 5: eine Ausführungsform mit zwei kompakt angeordneten Reaktoren mit stati- schen Mischern zwischen den Reaktoren,
- Figur 6: eine Ausführungsform mit zwei hintereinander geschalteten Reaktoren,
- Figur 7: eine weitere Ausführungsform mit jeweils von oben nach unten vom Reak- tionsgemisch durchströmten Reaktoren
- Figur 8A: eine gewinkelte Entlüftungsbohrung im Rohrboden,
- Figur 8B: eine Entlüftungsbohrung am Reaktormantel,
- Figur 9: eine Verbindung der Kontaktrohre mit der Plattierung des Rohrbodens und
- Figur 10: eine Verbindung zwischen Kontaktrohr und Trennblech.

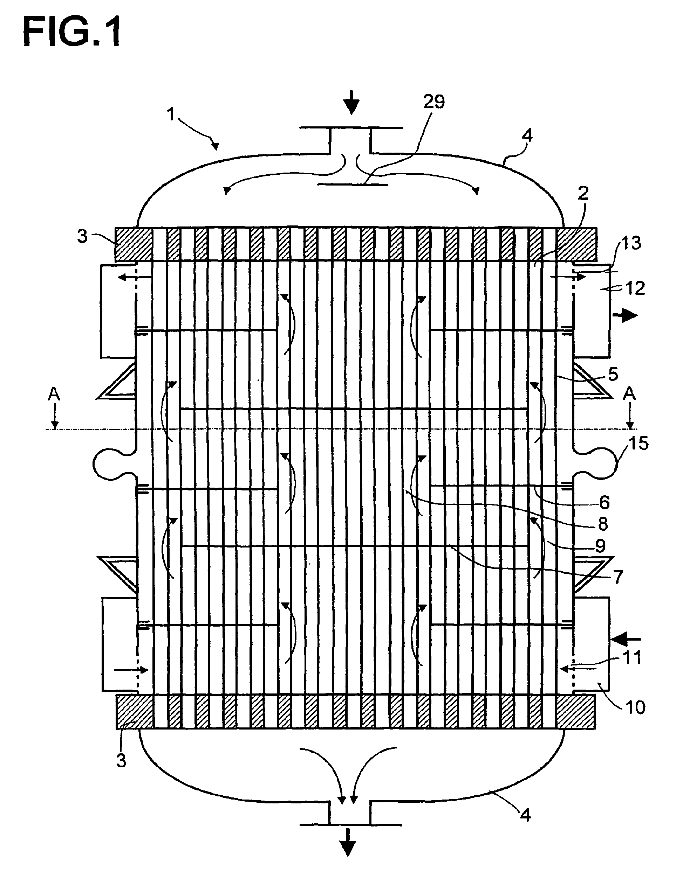

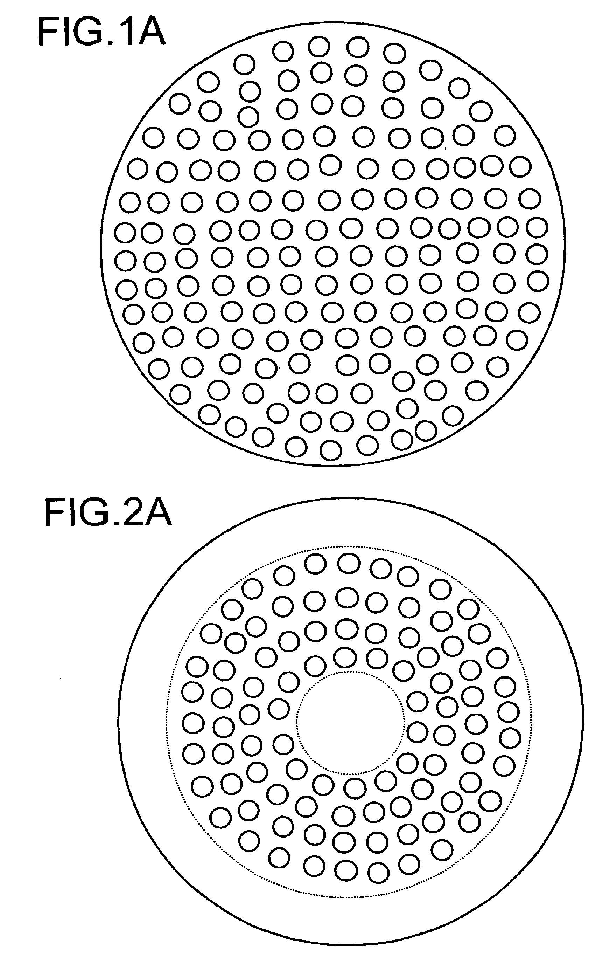

Figur 1 zeigt eine erste Ausführungsform eines Reaktors 1 für das erfindungsgemäße Verfahren im Längsschnitt, mit Kontaktrohren 2, die in Rohrböden 3 befestigt sind.

Beide Reaktorenden sind nach außen durch Hauben 4 begrenzt. Durch eine Haube erfolgt die Zuführung des Reaktionsgemisches zu den Kontaktrohren 2, durch die Haube am anderen Ende des Reaktors 1 wird der Produktstrom abgezogen. In den Hauben sind bevorzugt Gasverteiler zur Vergleichmäßigung des Gasstromes angeordnet, beispielsweise in Form einer Platte 29, insbesondere einer perforierten Platte.

Im Zwischenraum zwischen den Kontaktrohren 2 sind ringförmige Umlenkbleche 6 angeordnet, die kreisförmige Durchtrittsöffnungen 9 in der Reaktormitte freilassen sowie scheibenförmige Umlenkbleche 7, die ringförmige Durchtrittsöffnungen 9 am Reaktorrand freilassen. Das flüssige Wärmetauschmittel wird durch die untere Ringleitung 10 über Mantelöffnungen 11 in den Zwischenraum zwischen den Kontaktrohren 2 zugeführt und über die obere Ringleitung 12, über Mantelöffnungen 13 aus dem Reaktor abgezogen. Am Reaktormantel ist eine ringförmiger Kompensator 15 vorgesehen.

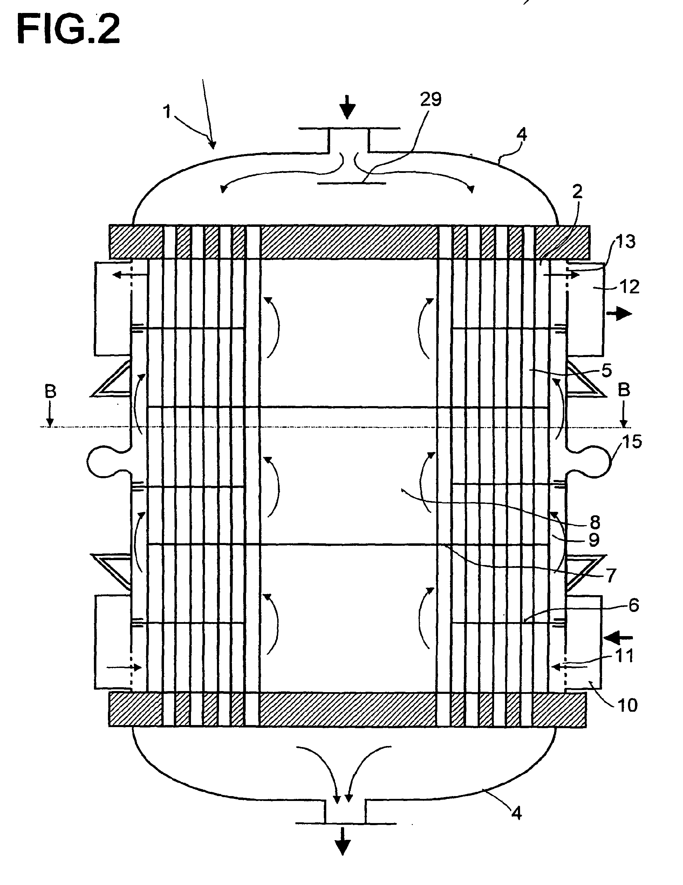

Die in Fig. 2 gleichfalls im Längsschnitt dargestellte weitere Ausführungsform unterscheidet sich von der vorhergehenden insbesondere dadurch, dass der Reaktorinnenraum im

Bereich der kreisförmigen Durchtrittsöffnungen 8 sowie der ringförmigen Durchtrittsöffnungen 9 für das Wärmetauschmittel unberohrt ist.

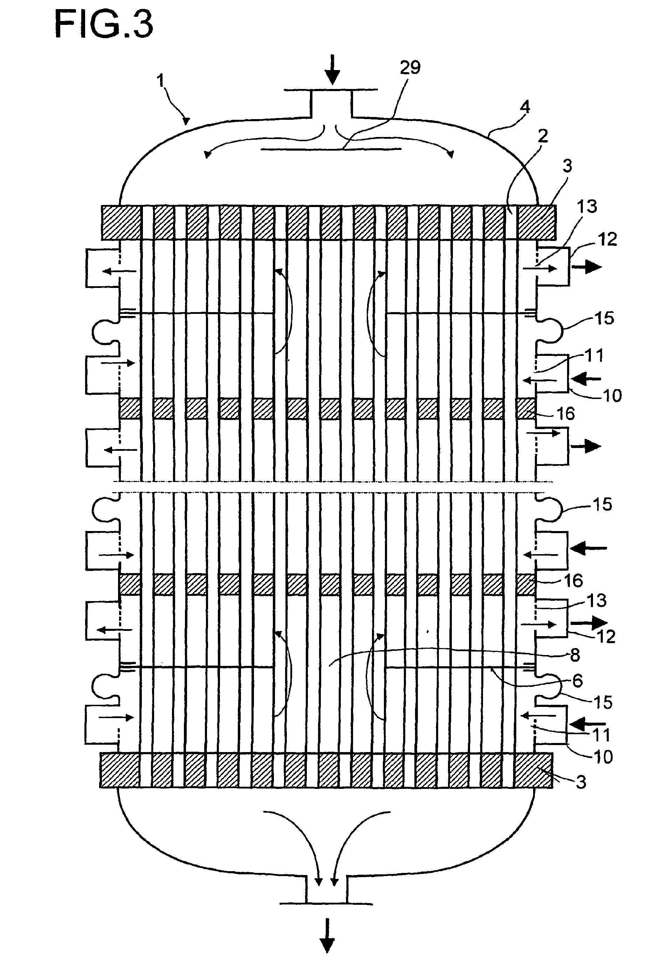

Die in Fig. 3 im Längsschnitt dargestellte Ausführungsform zeigt einen mehrzonigen, beispielhaft dreizonigen, Reaktor, dessen einzelne Reaktionszonen durch Trennbleche 16 voneinander getrennt sind.

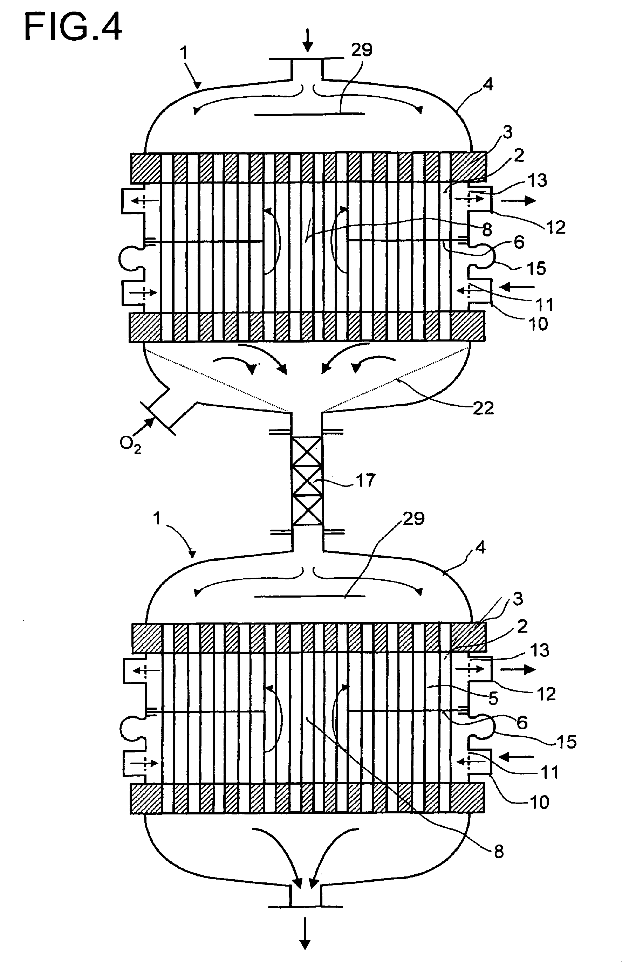

Die Ausführungsform in Fig. 4 zeigt zwei, vertikal übereinander angeordnete Reaktoren 1, mit einem statischen Mischer 17 im Verbindungsrohr zwischen den beiden Reaktoren 1. In der unteren Haube des oberen Reaktors 1 sind Lochbleche 22 angeordnet, zwecks Vergleichmäßigung des unterhalb desselben zwischeneingespeisten Sauerstoffstromes O₂.

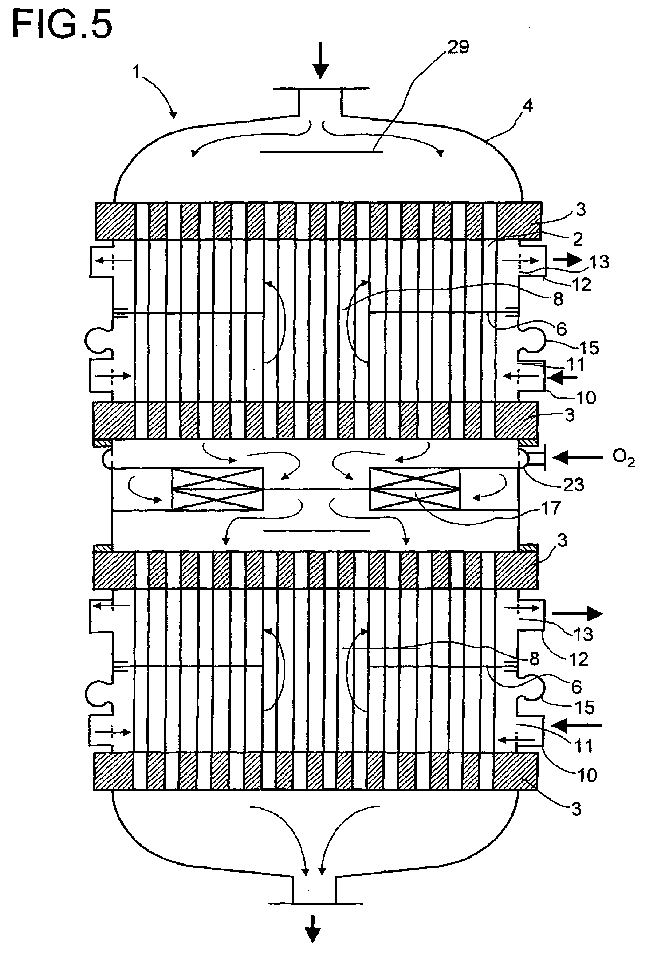

Fig. 5 zeigt eine weitere Ausführungsform mit beispielhaft zwei kompakt übereinander angeordneten Reaktoren 1, wobei aus Gründen der Raumersparnis auf die untere Haube des oberen Reaktors 1 sowie auf die obere Haube des unteren Reaktors 1 verzichtet wurde. Im Bereich zwischen den beiden Reaktoren ist eine Zwischeneinspeisung von Sauerstoff (O₂) über eine am Reaktorumfang aufgeschweißte Halbschale 23 vorgesehen. Nach der Zwischeneinspeisung von Sauerstoff ist ein statischer Mischer 17 angeordnet.

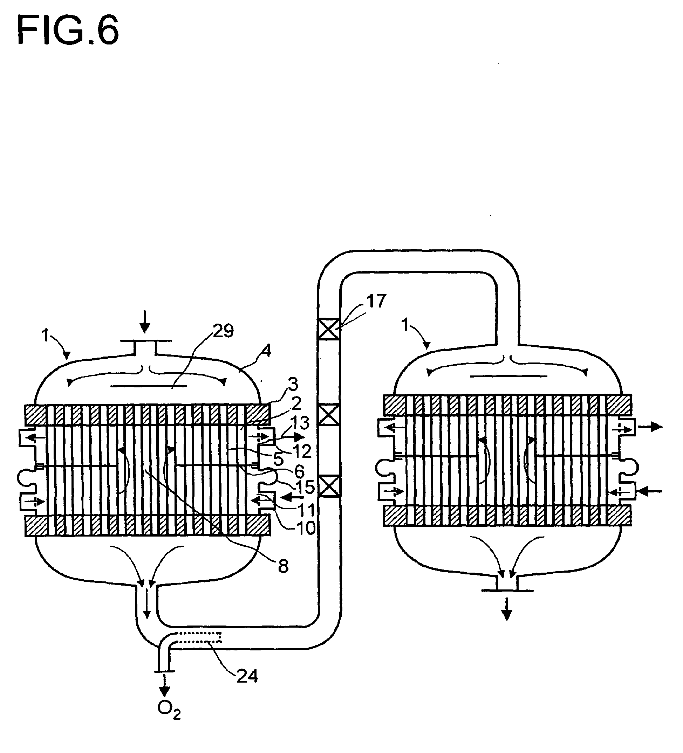

Die Ausführungsform in Fig. 6 zeigt zwei hintereinander geschaltete Reaktoren 1, mit Zwischeneinspeisung von Sauerstoff über ein perforiertes Einsteckrohr 24, das in das Verbindungsrohr zwischen den beiden Reaktoren mündet, sowie mit statischen Mischern 17 im Verbindungsrohr zwischen den beiden Reaktoren.

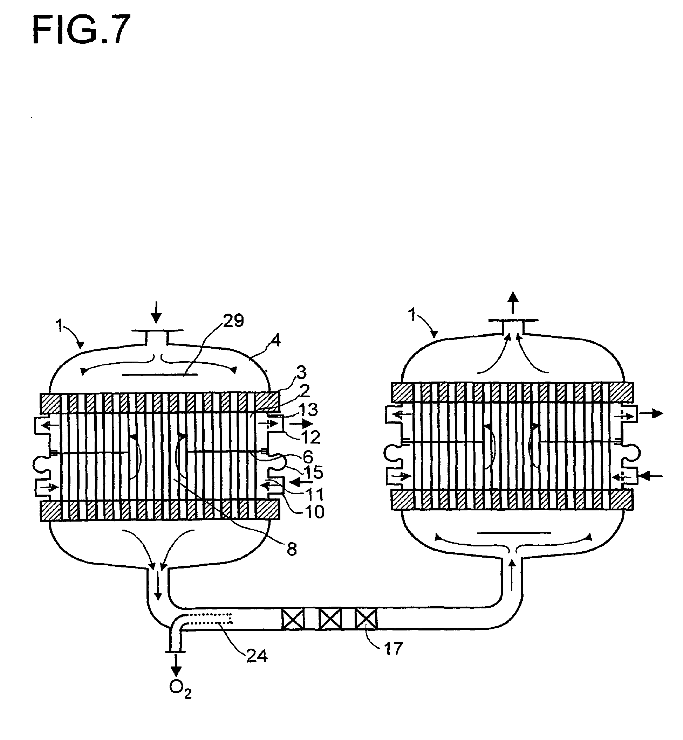

Die in Fig. 7 dargestellte Ausführungsform unterscheidet sich von der Ausführungsform in Fig. 6 dadurch, dass beide Reaktoren vom Reaktionsgemisch von oben nach unten und der zweite Reaktor von unten nach oben durchströmt werden.

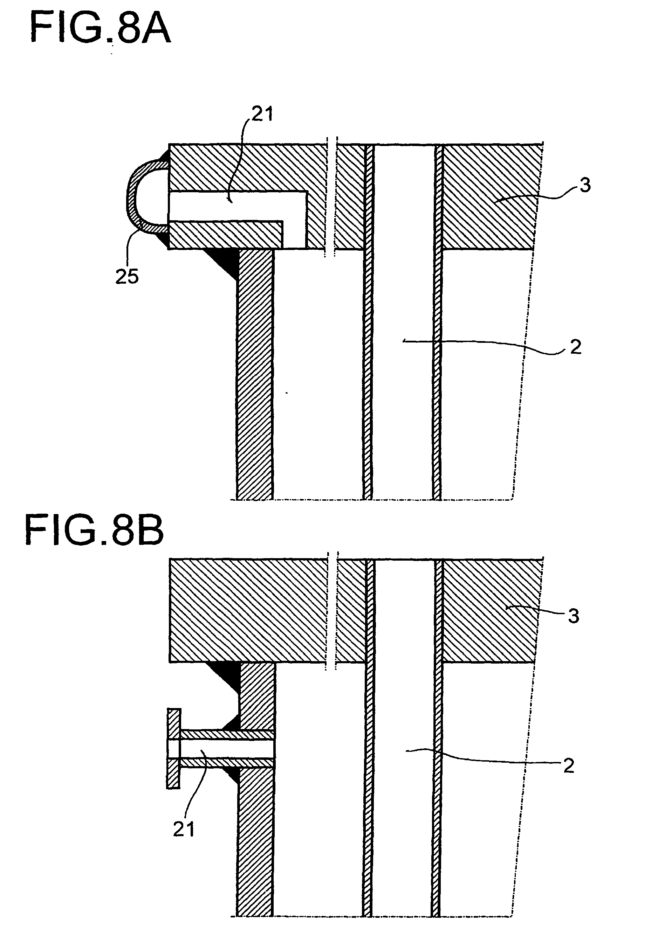

Der Ausschnitt in Fig. 8A zeigt eine gewinkelte Entlüftungsbohrung 21 im Rohrboden 3, mit Halbschale 25 über deren Entlüftungsbohrung 21.

Der Ausschnitt in Fig. 8B zeigt eine weitere Variante einer Entlüftungsbohrung 21, hier am Reaktormantel.

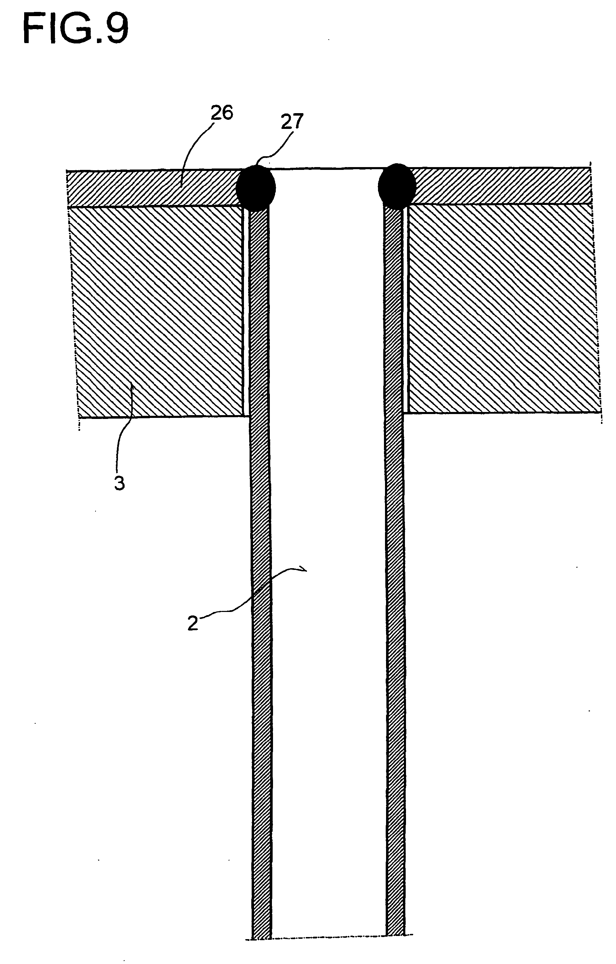

Der Ausschnitt in Fig. 9 zeigt die Verbindung der Kontaktrohre 2 mit der Plattierung 26 des Rohrbodens 3 in Form einer Schweißnaht 27.

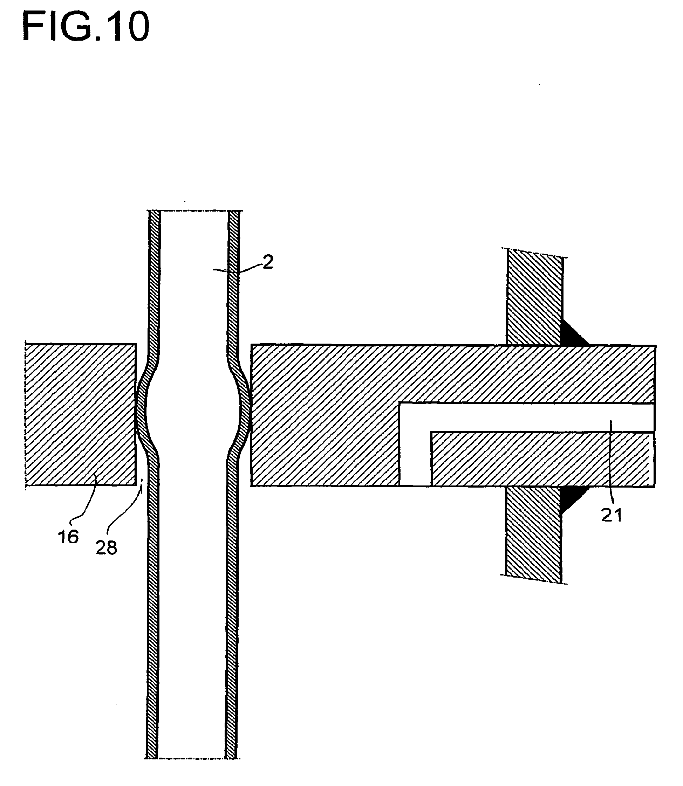

Der Ausschnitt in Fig. 10 zeigt die Verengung des Spaltes 28 zwischen einem Kontaktrohr 2 und dem Trennblech 16 durch Anwalzung des Kontaktrohrs 2 an das Trennblech 16 sowie eine gewinkelte Entlüftungsbohrung 21 im Trennblech 16.

**Bezugsziffernliste**
- 1: Reaktor
- 2: Kontaktrohre
- 3: Rohrböden
- 4: Hauben
- 5: Zwischenraum zwischen Kontaktrohren

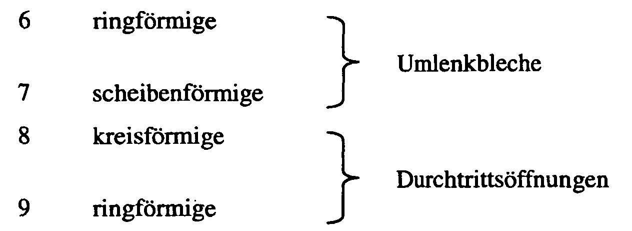

- 10: untere Ringleitung
- 11: Mantelöffnungen in der unteren Ringleitung
- 12: obere Ringleitung
- 13: Mantelöffnungen in der oberen Ringleitung
- 14: Spalte zwischen Kontaktrohren (2) und Umlenkblechen (6, 7)
- 15: Kompensator
- 16: Trennbleche
- 17: statische Mischer
- 18: Pumpe für Wärmetauschmittel
- 19: Kühler für Wärmetauschmittel
- 21: Entlüftungsbohrungen
- 22: Lochbleche
- 23: Halbschale
- 24: Einsteckrohr
- 25: Halbschale über Entlüftungsbohrung
- 26: Plattierung
- 27: Schweißnaht
- 28: Spalt zwischen Kontaktrohr und Trennblech
- 29: Prallplatte
- O₂: Sauerstoff-Zwischeneinspeisung

## Patentansprüche

1. Verfahren zur Herstellung von Chlor durch Gasphasenoxidation von Chlorwasserstoff mit einem molekularen Sauerstoff enthaltenden Gasstrom in Gegenwart eines Festbettkatalysators, **dadurch gekennzeichnet, dass** man das Verfahren in einem Reaktor (1) mit einem Bündel von parallel zueinander, in Reaktorlängsrichtung angeordneten Kontaktrohren (2) durchführt, die an ihren Enden in Rohrböden (3) befestigt sind, mit je einer Haube (4) an beiden Enden des Reaktors (1), sowie mit einem oder mehreren, senkrecht zur Reaktorlängsrichtung im Zwischenraum (5) zwischen den Kontaktrohren (2) angeordneten ringförmigen Umlenkblechen (6), die in der Reaktormitte kreisförmige Durchtrittsöffnungen (8) freilassen, und einem oder mehreren scheibenförmigen Umlenkblechen (7), die am Reaktorrand ringförmige Durchtrittsöffnungen (9) freilassen, mit alternierender Anordnung von ringförmigen Umlenkblechen (6) und scheibenförmigen Umlenkblechen (7), wobei die Kontaktrohre (2) mit dem Festbettkatalysator befüllt sind, der Chlorwasserstoff sowie der molekularen Sauerstoff enthaltende Gasstrom von einem Reaktorende über eine Haube (4) durch die Kontaktrohre (2) geleitet und das gasförmige Reaktionsgemisch vom entgegengesetzten Reaktorende über die zweite Haube (4) abgezogen und wobei durch den Zwischenraum (5) um die Kontaktrohre (2) ein flüssiges Wärmetauschmittel geleitet wird, und wobei der Reaktor (1) im Bereich der Durchtrittsöffnungen (8, 9) unberohrt ist.

2. Verfahren nach Anspruch 1, **dadurch gekennzeichnet, dass** das flüssige Wärmetauschmittel über eine untere Ringleitung (10) mit Mantelöffnungen (11) durch den Zwischenraum (5) um die Kontaktrohre (2) geleitet und über Mantelöffnungen (13) über eine obere Ringleitung (12) abgezogen wird.

3. Verfahren nach Anspruche 1 oder 2, **dadurch gekennzeichnet, dass** man das Verfahren in einem Reaktor (1) durchführt, worin alle ringförmigen Umlenkbleche (6) jeweils flächenmäßig gleich große kreisförmige Durchtrittsöffnungen (8) sowie alle scheibenförmigen Umlenkbleche (7) jeweils flächenmäßig gleich große ringförmige Durchtrittsöffnungen (9) freilassen.

4. Verfahren nach einem der Ansprüche 1 bis 3, **dadurch gekennzeichnet, dass** man das Verfahren in einem Reaktor (1) durchführt, worin die Fläche jeder Durchtrittsöffnung (7) jeweils 2 bis 40 %, bevorzugt 5 bis 20, des Reaktorquerschnitts beträgt.

5. Verfahren nach einem der Ansprüche 1 bis 4, **dadurch gekennzeichnet, dass** man das Verfahren in einem Reaktor mit 1000 bis 40.000, bevorzugt 10.000 bis 30.000 Kontaktrohren (2) aufweist.

6. Verfahren nach einem der Ansprüche 1 bis 5, **dadurch gekennzeichnet, dass** man das Verfahren in einem Reaktor (1) durchführt, worin jedes Kontaktrohr (2) eine Länge im Bereich von 1 bis 10 m, bevorzugt 1,5 bis 8,0 m, besonders bevorzugt im Bereich von 2,0 bis 7,0 m, aufweist.

7. Verfahren nach einem der Ansprüche 1 bis 6, **dadurch gekennzeichnet, dass** man das Verfahren in einem Reaktor (1) durchführt, worin jedes Kontaktrohr (2) eine Wandstärke im Bereich von 1,5 bis 5,0 mm, besonders von 2,0 bis 3,0 mm und einen Rohrinnendurchmesser im Bereich von 10 bis 70 mm, bevorzugt im Bereich von 15 bis 30 mm, aufweist.

8. Verfahren nach einem der Ansprüche 1 bis 7, **dadurch gekennzeichnet, dass** man das Verfahren in einem Reaktor (1) durchführt, dessen Kontaktrohre (2) derart im Innenraum des Reaktor (1) angeordnet sind, dass das Teilungsverhältnis, das heißt das Verhältnis zwischen dem Abstand der Mittelpunkte unmittelbar benachbarte Kontaktrohre (2) und dem Außendurchmesser der Kontaktrohre (2) im Bereich von 1,15 bis 1,6, bevorzugt im Bereich von 1,2 bis 1,4 liegt, wobei eine Dreiecksteilung der Kontaktrohre bevorzugt ist.

9. Verfahren nach einem der Ansprüche 1 bis 8, **dadurch gekennzeichnet, dass** man das Verfahren in einem Reaktor (1) durchführt, worin zwischen den Kontaktrohren (2) und den Umlenkblechen (6, 7) Spalte (14) von 0,1 bis 0,4 mm, bevorzugt von 0,15 bis 0,30 mm, vorhanden sind, wobei bevorzugt die Spalte (14) zwischen den Kontaktrohren (2) und den ringförmigen Umlenkblechen (6) von außen nach innen bevorzugt kontinuierlich zunehmen.

10. Verfahren nach einem der Ansprüche 1 bis 9, **dadurch gekennzeichnet, dass** die ringförmigen Umlenkbleche (6) an der Reaktorinnenwand flüssigkeitsdicht befestigt sind.

11. Verfahren nach einem der Ansprüche 1 bis 10, **dadurch gekennzeichnet, dass** man das Verfahren in einem Reaktor (1) durchführt, dessen Umlenkbleche (6, 7) eine Dicke im Bereich von 6 bis 30 mm, bevorzugt von 10 bis 20 mm, aufweisen.

12. Verfahren nach einem der Ansprüche 1 bis 11, **dadurch gekennzeichnet, dass** man das Verfahren in einem Reaktor (1) durchführt, der einen oder mehrere Kompensatoren (15) im Reaktormantel aufweist.

13. Verfahren nach einem der Ansprüche 1 bis 12, **dadurch gekennzeichnet, dass** man das gasförmige Reaktionsgemisch und das flüssige Wärmetauschmittel im Kreuzgegenstrom oder im Kreuzgleichstrom durch den Reaktor (1) leitet.

14. Verfahren nach einem der Ansprüche 1 bis 13, **dadurch gekennzeichnet, dass** der der Zuführung des gasförmigen Reaktionsgemisches zugewandte Bereich der Kontaktrohre (2) auf eine Länge von 5 bis 20 %, bevorzugt auf eine Länge von 5 bis 10 % der Gesamtlänge der Kontaktrohre (2) mit einem Inertmaterial befüllt ist.

15. Verfahren nach einem der Ansprüche 1 bis 14, **dadurch gekennzeichnet, dass** alle Bauteile des Reaktors (1), mit denen das Reaktionsgas in Berührung kommt, aus Reinnickel oder einer Nickelbasislegierung hergestellt oder mit Reinnickel oder einer Nickelbasislegierung plattiert sind.

16. Verfahren nach Anspruch 15, **dadurch gekennzeichnet, dass** die Kontaktrohre (2) aus Reinnickel oder eine Nickelbasislegierung hergestellt und die Rohrböden (3) mit Reinnickel oder einer Nickelbasislegierung plattiert sind und dass die Kontaktrohre (2) lediglich an der Plattierung mit den Rohrböden verschweißt sind.

17. Verfahren nach einem der Ansprüche 1 bis 16, **dadurch gekennzeichnet, dass** der Reaktor (1) zwei oder mehrere Reaktionszonen aufweist, die mittels Trennblechen (16) weitgehend flüssigkeitsdicht getrennt sind, insbesondere durch Anwalzung der Kontaktrohre (2) an die Trennbleche (16).

18. Verfahren nach einem der Ansprüche 1 bis 15, **dadurch gekennzeichnet, dass** man das Verfahren in zwei oder mehreren Reaktoren (1) durchführt.

19. Verfahren nach Anspruch 18, **dadurch gekennzeichnet, dass** sich die Kontaktrohre (2)von einem Reaktor (1) zum anderen in ihrem Innendurchmesser unterscheiden, insbesondere dass Reaktoren (1), in denen besonders Hot-Spot gefährdete Reaktionsteilabschnitte verlaufen, Kontaktrohre (2) mit geringerem Innendurchmesser im Vergleich zu den übrigen Reaktoren (1) aufweisen.

20. Verfahren nach Anspruch 18 oder 19, **dadurch gekennzeichnet, dass** zwischen den Reaktoren (1) statische Mischer (17) angeordnet sind.

21. Verfahren nach einem der Ansprüche 1 bis 20, **dadurch gekennzeichnet, dass** Entlüftungsbohrungen (21) für das Wärmetauschmittel im Reaktormantel und/oder in den Rohrböden (3) und/oder in den Trennblechen (16) vorgesehen sind.

## Claims

1. A process for preparing chlorine by gas-phase oxidation of hydrogen chloride by means of a gas stream comprising molecular oxygen in the presence of a fixed-bed catalyst, which is carried out in a reactor (1) having a bundle of parallel catalyst tubes (2) which are arranged in the longitudinal direction of the reactor and are fixed at their ends into tube plates (3), with a cap (4) at each end of the reactor (1) and with one or more annular deflection plates (6) which are arranged perpendicular to the longitudinal direction of the reactor in the intermediate space (5) between the catalyst tubes (2) and leave circular passages (8) free in the middle of the reactor and one or more disk-shaped deflection plates (7) which leave annular passages (9) free at the edge of the reactor, with alternating arrangement of annular deflection plates (6) and disk-shaped deflection plates (7) and with the catalyst tubes (2) being charged with the fixed-bed catalyst, the hydrogen chloride and the gas stream comprising molecular oxygen being passed from one end of the reactor via a cap (4) through the catalyst tubes (2) and the gaseous reaction mixture being taken off from the opposite end of the reactor via the second cap (4) and a liquid heat transfer medium being passed through the intermediate space (5) around the catalyst tubes (2) and the reactor (1) having no tubes in the region of the passages (8, 9).

2. The process according to claim 1, wherein the liquid heat transfer medium is passed via an outer ring line (10) having openings (11) in the wall through the intermediate space (5) around the catalyst tubes (2) and is taken off via openings (13) in the wall via an upper ring line (12).

3. The process according to claim 1 or 2 carried out in a reactor (1) in which all annular deflection plates (6) leave circular passages (8) which each have the same area free and all disk-shaped deflection plates (7) leave annular passages (9) which each have the same area free.

4. The process according to any of claims 1 to 3 carried out in a reactor (1) in which the area of each passage (7) is from 2 to 40%, preferably from 5 to 20, of the cross section of the reactor.

5. The process according to any of claims 1 to 4 being had in a reactor having from 1000 to 40 000, preferably from 10 000 to 30 000, catalyst tubes (2).

6. The process according to any of claims 1 to 5 carried out in a reactor (1) in which each catalyst tube (2) has a length in the range from 1 to 10 m, preferably from 1.5 to 8.0 m, particularly preferably in the range from 2.0 to 7.0 m.

7. The process according to any of claims 1 to 6 carried out in a reactor (1) in which each catalyst tube (2) has a wall thickness in the range from 1.5 to 5.0 mm, in particular from 2.0 to 3.0 mm, and an internal diameter in the range from 10 to 70 mm, preferably in the range from 15 to 30 mm.

8. The process according to any of claims 1 to 7 carried out in a reactor (1) whose catalyst tubes (2) are arranged in the interior space of the reactor (1) in such a way that the separation ratio, i.e. the ratio of the distance between the midpoints of directly adjacent catalyst tubes (2) to the external diameter of the catalyst tubes (2) is in the range from 1.15 to 1.6, preferably in the range from 1.2 to 1.4, with the catalyst tubes preferably being present in a triangular arrangement.

9. The process according to any of claims 1 to 8 carried out in a reactor (1) in which gaps (14) of from 0.1 to 0.4 mm, preferably from 0.15 to 0.30 mm, are present between the catalyst tubes (2) and the deflection plates (6, 7) and the gaps (14) between the catalyst tubes (2) and the annular deflection plates (6) increase, preferably continuously, from the outside inward.

10. The process according to any of claims 1 to 9, wherein the annular deflection plates (6) are fixed in a liquid-tight manner to the interior wall of the reactor.

11. The process according to any of claims 1 to 10 carried out in a reactor (1) whose deflection plates (6, 7) have a thickness in the range from 6 to 30 mm, preferably from 10 to 20 mm.

12. The process according to any of claims 1 to 11 carried out in a reactor (1) having one or more compensators (15) in its outer wall.

13. The process according to any of claims 1 to 12, wherein the gaseous reaction mixture and the liquid heat transfer medium are passed through the reactor (1) in cross-countercurrent or in cross-cocurrent.

14. The process according to any of claims 1 to 13, wherein the region of the catalyst tubes (2) nearest the end at which the gaseous reaction mixture is fed in is filled with an inert material to a length of from 5 to 20%, preferably a length of from 5 to 10%, of the total length of the catalyst tubes (2).

15. The process according to any of claims 1 to 14, wherein all components of the reactor (1) which come into contact with the reaction gas are made of pure nickel or a nickel-based alloy or are plated with pure nickel or a nickel-based alloy.

16. The process according to claim 15, wherein the catalyst tubes (2) are made of pure nickel or a nickel-based alloy and the tube plates (3) are plated with pure nickel or a nickel-based alloy and the catalyst tubes (2) are welded to the tube plates only at the plating.

17. The process according to any of claims 1 to 16, wherein the reactor (1) has two or more reaction zones which are separated in a largely liquid-tight manner by means of separating plates (16), in particular by rolling of the catalyst tubes (2) onto the separating plates (16).

18. The process according to any of claims 1 to 15 carried out in two or more reactors (1).

19. The process according to claim 18, wherein the internal diameter of the catalyst tubes (2) differs from one reactor (1) to the other, in particular wherein reactors (1) in which reaction subsections which are at particular risk from hot spots occur have catalyst tubes (2) having a smaller internal diameter than the remaining reactors (1).

20. The process according to claim 18 or 19, wherein static mixers (17) are installed between the reactors (1).

21. The process according to any of claims 1 to 20, wherein ventilation holes (21) for the heat transfer medium are provided in the outer wall of the reactor and/or in the tube plates (3) and/or in the separating plates (16).

## Revendications

1. Procédé de fabrication de chlore par oxydation en phase gazeuse de chlorure d'hydrogène avec un courant gazeux contenant de l'oxygène moléculaire en présence d'un catalyseur en lit fixe, **caractérisé en ce que** le procédé est réalisé dans un réacteur (1) qui contient un faisceau de tubes de contact (2) parallèles les uns aux autres, placés dans la direction longitudinale du réacteur, qui sont fixés à leurs extrémités dans des plaques tubulaires (3), avec à chaque fois un collecteur (4) aux deux extrémités du réacteur (1), ainsi qu'avec un ou plusieurs déflecteurs annulaires (6) placés perpendiculairement à la direction longitudinale du réacteur dans l'espace intermédiaire (5) entre les tubes de contact (2), qui libèrent des ouvertures de passage circulaires (8) au centre du réacteur, et un ou plusieurs déflecteurs en forme de disque (7), qui libèrent des ouvertures de passage annulaires (9) au bord du réacteur, avec un agencement alterné de déflecteurs annulaires (6) et de déflecteurs en forme de disque (7), les tubes de contact (2) étant remplis avec le catalyseur en lit fixe, le chlorure d'hydrogène et le courant gazeux contenant l'oxygène moléculaire étant introduits dans les tubes de contact (2) à une extrémité du réacteur par le biais d'un collecteur (4) et le mélange réactionnel gazeux étant soutiré à l'extrémité de réacteur opposée par le biais du second collecteur (4), et un agent d'échange de chaleur fluide étant mis en circulation dans l'espace intermédiaire (5) autour des tubes de contact (2), et le réacteur (1) étant sans tubes dans la zone des ouvertures de passage (8, 9).

2. Procédé selon la revendication 1, **caractérisé en ce que** l'agent d'échange de chaleur fluide est introduit par le biais d'une conduite circulaire inférieure (10) munie d'ouvertures d'enveloppe (11) dans l'espace intermédiaire (5) autour des tubes de contact (2) et soutiré par le biais d'ouvertures d'enveloppe (13) par une conduite circulaire supérieure (12).

3. Procédé selon la revendication 1 ou 2, **caractérisé en ce que** le procédé est réalisé dans un réacteur (1) dont tous les déflecteurs annulaires (6) libèrent à chaque fois des ouvertures de passage circulaires (8) de même superficie et dont tous les déflecteurs en forme de disque (7) libèrent à chaque fois des ouvertures de passage annulaires (9) de même superficie.

4. Procédé selon l'une quelconque des revendications 1 à 3, **caractérisé en ce que** le procédé est réalisé dans un réacteur (1) dont la surface de chaque ouverture de passage (7) est à chaque fois de 2 à 40 %, de préférence 5 à 20, de la section du réacteur.

5. Procédé selon l'une quelconque des revendications 1 à 4, **caractérisé en ce que** le procédé est réalisé dans un réacteur qui comprend 1 000 à 40 000, de préférence 10 000 à 30 000 tubes de contact (2).

6. Procédé selon l'une quelconque des revendications 1 à 5, **caractérisé en ce que** le procédé est réalisé dans un réacteur (1) dont chaque tube de contact (2) présente une longueur dans la plage allant de 1 à 10 m, de préférence 1,5 à 8,0 m, de manière particulièrement préférée dans la plage allant de 2,0 à 7,0 m.

7. Procédé selon l'une quelconque des revendications 1 à 6, **caractérisé en ce que** le procédé est réalisé dans un réacteur (1) dont chaque tube de contact (2) présente une épaisseur de paroi dans la plage allant de 1,5 à 5,0 mm, notamment de 2,0 à 3,0 mm, et un diamètre interne de tube dans la plage allant de 10 à 70 mm, de préférence dans la plage allant de 15 à 30 mm.

8. Procédé selon l'une quelconque des revendications 1 à 7, **caractérisé en ce que** le procédé est réalisé dans un réacteur (1) dont les tubes de contact (2) sont agencés dans la chambre intérieure du réacteur (1) de manière à ce que le rapport de répartition, c'est-à-dire le rapport entre la distance entre les points centraux de tubes de contact (2) directement voisins et le diamètre externe des tubes de contact (2), se situe dans la plage allant de 1,15 à 1,6, de préférence dans la plage allant de 1,2 à 1,4, une répartition triangulaire des tubes de contact étant préférée.

9. Procédé selon l'une quelconque des revendications 1 à 8, **caractérisé en ce que** le procédé est réalisé dans un réacteur (1) dans lequel des fentes (14) de 0,1 à 0,4 mm, de préférence de 0,15 à 0,30 mm, sont présentes entre les tubes de contact (2) et les déflecteurs (6, 7), de préférence les fentes (14) entre les tubes de contact (2) et les déflecteurs annulaires (6) augmentant de préférence en continu de l'extérieur vers l'intérieur.

10. Procédé selon l'une quelconque des revendications 1 à 9, **caractérisé en ce que** les
déflecteurs annulaires (6) sont fixés de manière étanche aux fluides sur la paroi interne du réacteur.

11. Procédé selon l'une quelconque des revendications 1 à 10, **caractérisé en ce que** le procédé est réalisé dans un réacteur (1) dont les déflecteurs (6, 7) présentent une épaisseur dans la plage allant de 6 à 30 mm, de préférence de 10 à 20 mm.

12. Procédé selon l'une quelconque des revendications 1 à 11, **caractérisé en ce que** le procédé est réalisé dans un réacteur (1) qui comprend un ou plusieurs compensateurs (15) dans l'enveloppe du réacteur.

13. Procédé selon l'une quelconque des revendications 1 à 12, **caractérisé en ce que** le mélange réactionnel gazeux et l'agent d'échange de chaleur fluide sont mis en circulation à contre-courant croisé ou à co-courant croisé dans le réacteur (1).

14. Procédé selon l'une quelconque des revendications 1 à 13, **caractérisé en ce que** la zone opposée à l'alimentation du mélange réactionnel gazeux des tubes de contact (2) est remplie avec un matériau inerte sur une longueur de 5 à 20 %, de préférence sur une longueur de 5 à 10 %, de la longueur totale des tubes de contact (2).

15. Procédé selon l'une quelconque des revendications 1 à 14, **caractérisé en ce que** tous les composants du réacteur (1) avec lesquels le gaz réactionnel entre en contact sont fabriqués en nickel pur ou en un alliage à base de nickel ou plaqués avec du nickel pur ou un alliage à base de nickel.

16. Procédé selon la revendication 15, **caractérisé en ce que** les tubes de contact (2) sont fabriqués en nickel pur ou en un alliage à base de nickel et les plaques tubulaires (3) sont plaquées avec du nickel pur ou un alliage à base de nickel, et **en ce que** les tubes de contact (2) sont soudés avec les plaques tubulaires uniquement sur le plaquage.

17. Procédé selon l'une quelconque des revendications 1 à 16, **caractérisé en ce que** le réacteur (1) comprend deux zones de réaction ou plus, qui sont séparées d'une manière essentiellement étanche aux fluides par des plaques de séparation (16), notamment par laminage des tubes de contact (2) sur les plaques de séparation (16).

18. Procédé selon l'une quelconque des revendications 1 à 15, **caractérisé en ce que** le procédé est réalisé dans deux réacteurs (1) ou plus.

19. Procédé selon la revendication 18, **caractérisé en ce que** les tubes de contact (2) diffèrent d'un réacteur (1) à un autre par leur diamètre interne, notamment **en ce que** les réacteurs (1) dans lesquels des sections de réaction particulièrement à risque de point chaud se déroulent comprennent des tubes de contact (2) ayant un diamètre plus petit que les autres réacteurs (1).

20. Procédé selon la revendication 18 ou 19, **caractérisé en ce que** des mélangeurs statiques (17) sont placés entre les réacteurs (1).

21. Procédé selon l'une quelconque des revendications 1 à 20, **caractérisé en ce que** des alésages d'aération (21) pour l'agent d'échange de chaleur sont prévus dans l'enveloppe du réacteur et/ou dans les plaques tubulaires (3) et/ou dans les déflecteurs (16).
